# EUROPEAN PATENT SPECIFICATION

(11) **EP 0 853 025 B1**
(45) Date of publication and mention of the grant of the patent: **01.10.2003**
(21) Application number: 98300206.4
(22) Date of filing: 13.01.1998
(51) Int. Cl.: B60R 13/10

(54) **Method and apparatus for assembly of identification plates**
Verfahren und Vorrichtung zum Herstellen von Fahrzeugnummernschildern
Procédé et dispositif de fabrication de plaques minéralogiques

(30) Priority: 13.01.1997 GB 9700543
(43) Date of publication of application: 15.07.1998
(73) Proprietor: STATEFRESH Ltd., London NW2 7JJ (GB)
(72) Inventor: Taffender, Richard, 66 Electric Avenue, Birmimgham B6 7JJ (GB)
(74) Representative: King, James Bertram

(56) References cited:
- DE-U- 9 411 347
- FR-A- 2 238 409
- GB-A- 2 159 313
- GB-A- 2 197 976

## Description

This invention relates to a method and apparatus for facilitating the assembly of identification plates being plates which carry indicia and which are generally assembled individually for a particular purpose. This invention has for the main object to provide a more accurate and simplified method and apparatus for assembly of vehicle number plates where each plate, or set of plates, carries an unique series of letters or numerals.

Customary methods of assembly of vehicle number plates, as example, use a front plate of rigid clear plastics material to which is bonded a rear sheet of a plastics material which incorporates, or has applied thereto, a thin sheet of highly reflective background material such that said background sheet is viewed through the front plate. Between the front plate and rear sheet opaque indicia have been applied by transfer from "tiles" on which they are supported before the sheets are bonded together and thus the indicia are viewed through the front plate against the highly reflective background sheet.

The plates are normally assembled by hand with the indicia being applied either in a reverse sense to the front plate or overlaid onto the rear plate. The reflective background sheet or one of the plates has a self-adhesive coating by which the sheet and the relevant plate can be bonded together. The background sheet has to be made slightly larger in size than the plates to allow for any slight longitudinal misalignment which inevitably occurs with hand assembly due to the elongate construction which causes "run-out" when the sheet is applied from one end. Here it will be understood that the background sheet or the plate is applied progressively whilst a protective backing is peeled away. This being important to ensure wrinkles and air bubbles are excluded. This operation is subject to tolerances and to avoid any marginal gaps which look unsightly the backing sheet is made slightly larger in dimension.
After application the surplus material is trimmed away to the size of the plate. Reference is made *inter alia* to EP 0102904 A and GB 2093622 as examples of assembly.

It is an object of this invention to provide a method and an apparatus to facilitate carrying out the method which allows a backing sheet to be used of the exact size of the plate thus avoiding the need for later trimming of the sheet to size. A further object is to provide a much simplified method of initially connecting the adhesive sheet with a plate which nevertheless provides an acceptable if not improved result.

In accordance with this invention there is provided a method of assembling a vehicle number plate from:
i) a reflective sheet,
ii) indicia and
iii) a cover plate;
the reflective sheet having an identical size to that of the cover plate, the cover plate being provided with an adhesive on its surface, the method comprising overlaying the reflective sheet and indicia with the cover plate and subjecting the reflective sheet, indicia and cover plate to pressure to bond the sheet and cover plate together, **characterised by** the overlaying step comprising positioning the cover plate above the reflective sheet and indicia, and by allowing the cover plate to free fall under gravity onto the reflective sheet and indicia.

In the method of this invention it has been found, most surprisingly, that after removal of the protective backing from the adhesive coated side of a plate, if the plate is allowed to fall under gravity and guided by a simple jig structure precise and consistent mating of the adhesive surface and the sheet is ensured. It is believed that this is due to the cushioning effect produced by air moved from between the components as they come together giving a uniform mating free from extraneous pressure and forces normally present in bringing the parts together by hand. The important further advantage is that the reflective sheet may be of identical size to that of the backing plate thus obviating the need for trimming after final bonding. A secondary effect and advantage is that the reflective sheet and the plates may have radiused corners with the reflective sheet being pre-cut or perforated on a roll.

This invention also provides an an apparatus for assembling a vehicle number plate from;
i) a reflective sheet,
ii) indicia and
iii) a cover plate with an adhesive on its surface;
the cover plate being placed over the reflective sheet and indicia, the apparatus comprising a jig having a base and a number of abutments, **characterised in that** the abutments comprise upstanding parallel posts to centralise the cover plate above the reflective sheet before the cover plate is dropped to contact the sheet by gravity.

The jig may be of a simple construction comprising a base member with upstanding posts defining the four sides of the plate. The dimensions need to be accurate to ensure precise location of the plate and the sheet but with a small clearance to allow the free-fall action avoiding too much play.

Typically two posts define each longer side and one post at each of the ends. Preferably the area between the posts forming the jig has a raised platform sufficient to allow the opposed edges of the assembled sheet and plate to be gripped by the fingers for removal it being understood that the bond at this stage is only lightly made. The final assembly being permanently bonded by passing between pressure rollers.

In an embodiment some or all of the posts may have a slight eccentricity in cross-section or mounting so that rotation thereof produces a small adjustment in the dimensions of the jig. This feature assists in setting the dimensions to produce optimum free-fall characteristics whilst still providing accurate alignment.

The principle on which this invention is based is the discovery that a very accurate connection between the reflective sheet and the coated plates can be achieved by the free-fall dropping action within the confines of a vertical jig structure this then leading to the advantage of the components being able to have identical dimensions and even profiles other than square or rectangular and thus the difficult step of trimming after bonding is avoided.

Further and preferred and advantageous features of this invention together with preferred apparatus for carrying out the method of this invention are described in the following and by reference to the drawings showing the sequence of steps in the method using the preferred apparatus. In the drawings:-
**Figs 1a to 1h**, show the sequence using a simple jig apparatus according to this invention,
**Figs 2a to 2g**, show the sequence using a more automated jig apparatus according to a further embodiment, and
**Figs 3a and 3b,** show an arrangement which includes adjustable locating posts.

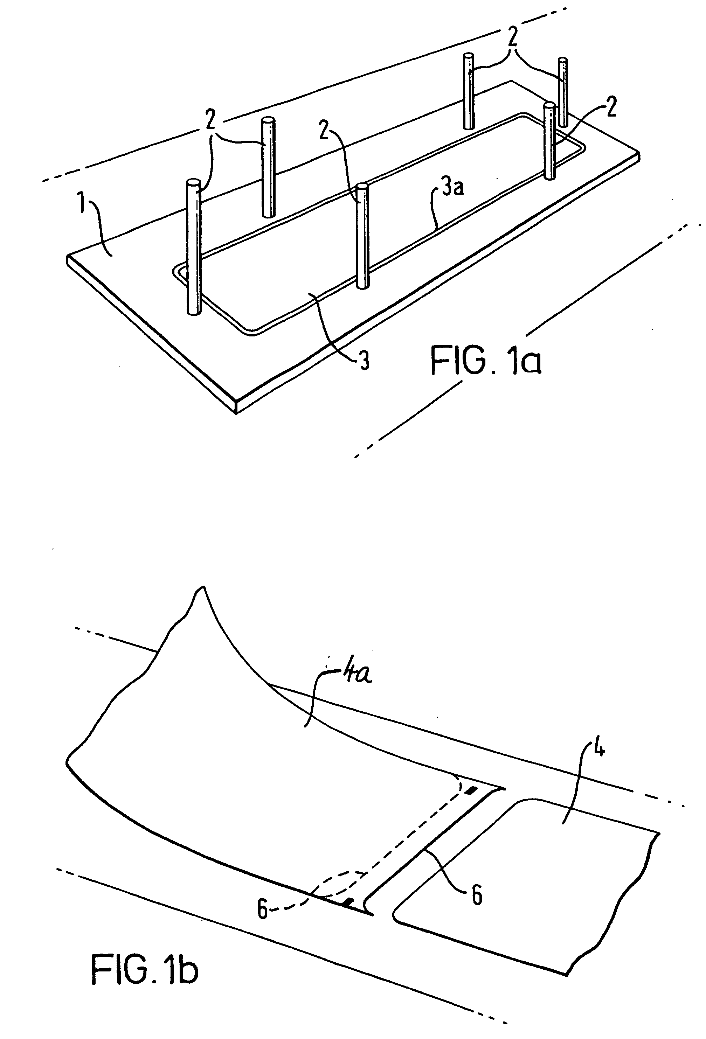

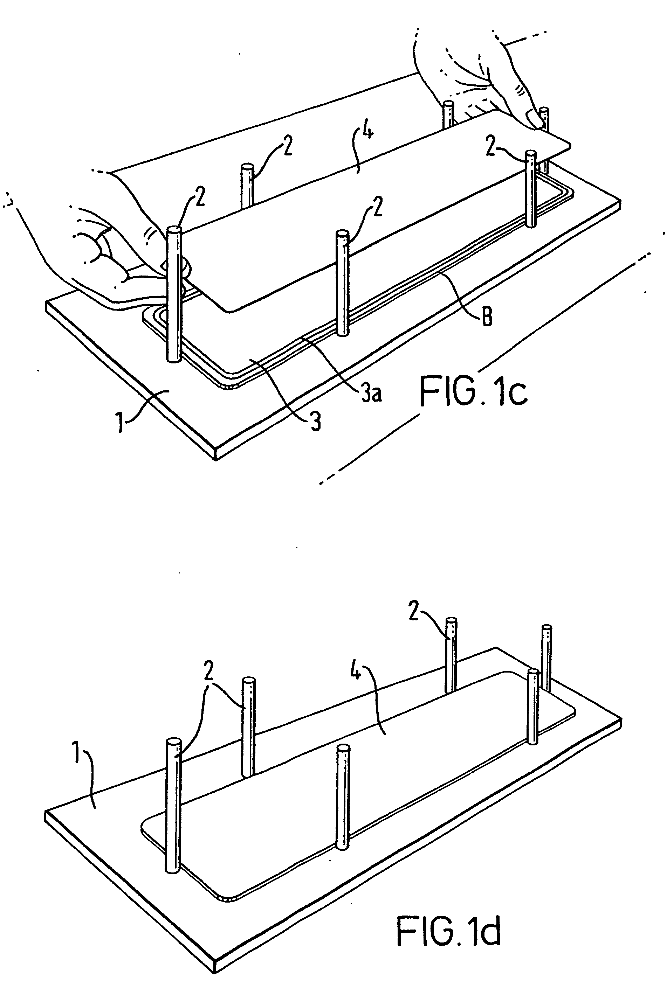

Referring to the Fig 1a the jig apparatus comprises a rigid base 1 from which six posts 2 upstand, the posts define the side edges of the vehicle number plate to be assembled. Between the posts a raised platform 3 is provided generally indicated by the lines 3a comprising a sheet material bonded permanently to the base 1. This platform is of the same or slightly smaller size as the number plate to be assembled. A length of highly reflective backing sheet 4 is torn from a roll 4a with the ends of each length being defined by perforated portions 6 which are removed as shown in Fig. 1b. This forms a backing sheet of the exact size of the number plate including rounded corners. The separated sheet 4 is then laid onto the platform 3 between the posts 2 as shown in Fig. 1c. In an alternative optional arrangement a base sheet or back plate B may be provided positioned on the platform 3 and located by the posts and onto which the sheet 4 is dropped. This back plate is then bonded to the rear of the sheet 4 or subsequently connected to the front plate. As is known the upper facing surface of the sheet 4 thus presented as shown in Fig. 1c and 1d will have bonded thereto indicia which have been transferred from tiles by the known procedure, such indicia not being shown here.

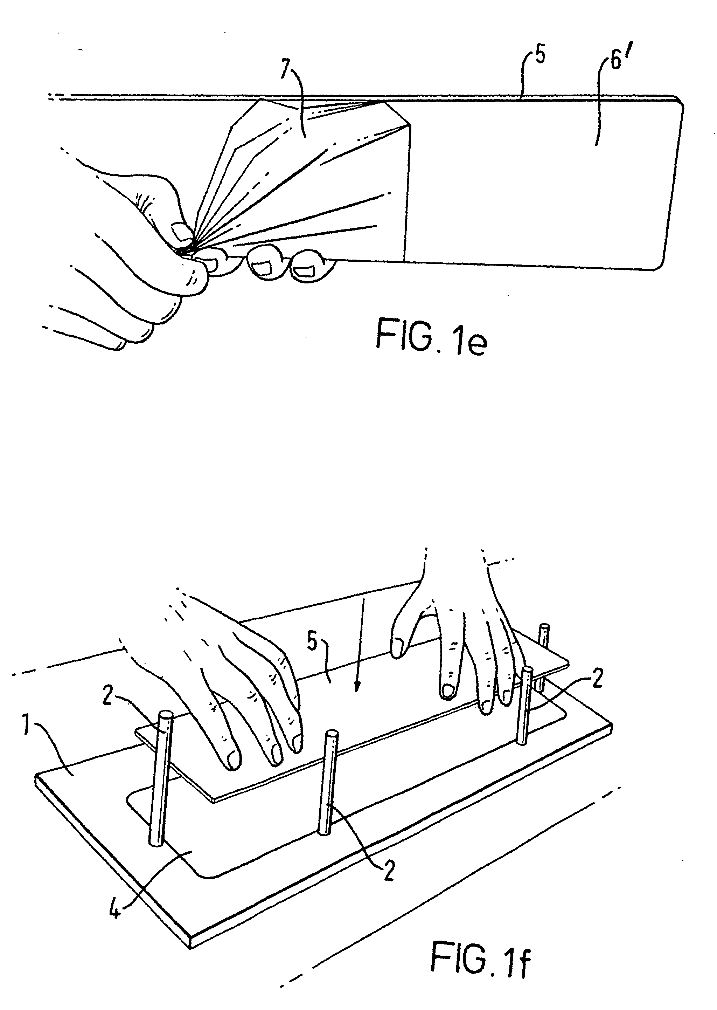

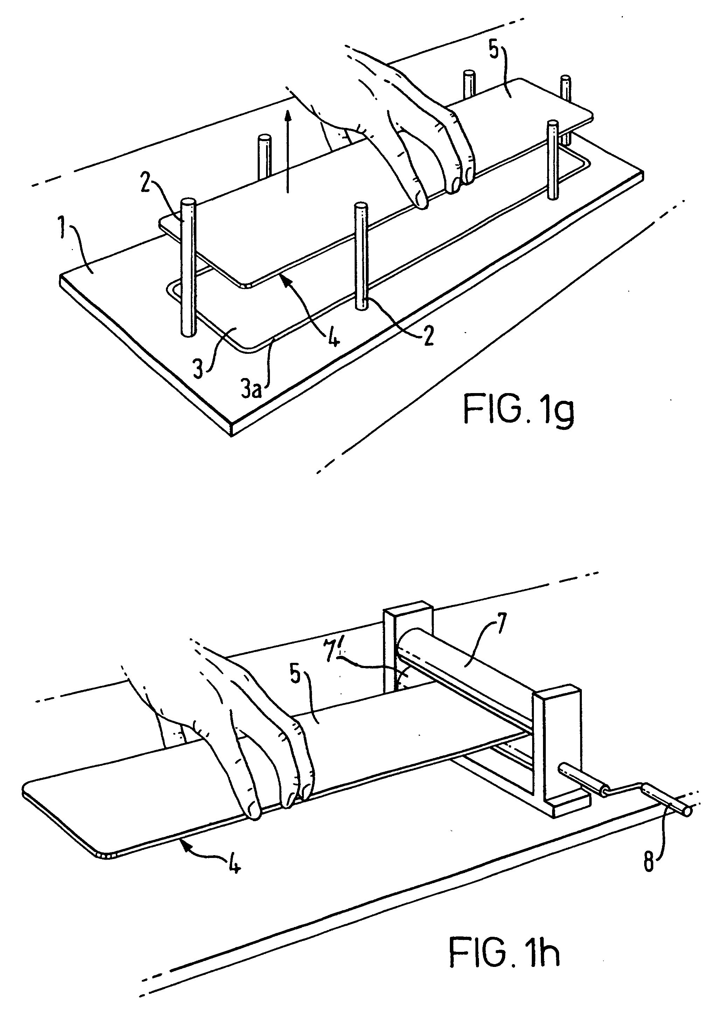

The next stage is shown in Fig. 1e where a clear transparent plate 5 provided with an adhesive coated surface 6' has the protective backing 7 peeled-away whereupon the plate is located, adhesive side down, between the posts 2 and then allowed to fall under gravity as illustrated in Fig. 1f. The plate to which the sheet is now attached may be removed from the jig as shown in Fig. 1g. The bonding is now consolidated by passing the assembly comprising the sheet 4 adhered to the plate 5 between pressure rollers 7 and 7' operated manually by handle 8 and as shown in Fig. 1h.

A feature of this invention is the reflective sheet which has shaped ends, here rounded, such a shape could not be used with known methods as exact alignment would be impossible. There is no wastage due to trimming in the present invention.

The platform or spacer on the base should be the size of the plate or possibly slightly smaller and permits easy retrieval of the assembly from the jig.

The posts should have a height of typically between 7cm and 14cm. The spacing of the posts related to the plate dimensions are important. The posts should have low friction and may be polyethylene of a high density type.

It has been found desirable for the plate to be dropped from a parallel position but good results are also possible if the plate is dropped from an angle starting with contact between sheet 4 and plate 5 along a shorter side.

If it is required the whole assembly thus formed may be turned over and a rear adhesive coated plate applied by a similar method. Usually, however, the number plate will comprise the transparent front plate with the reflective indicia bearing sheet adhesively connected thereto.

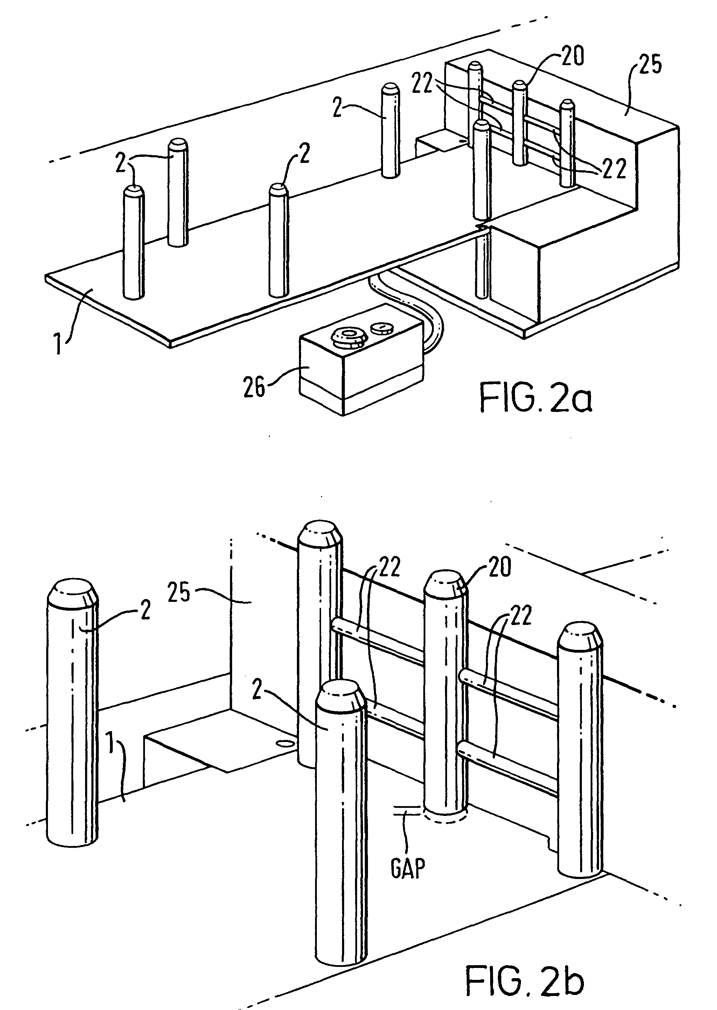

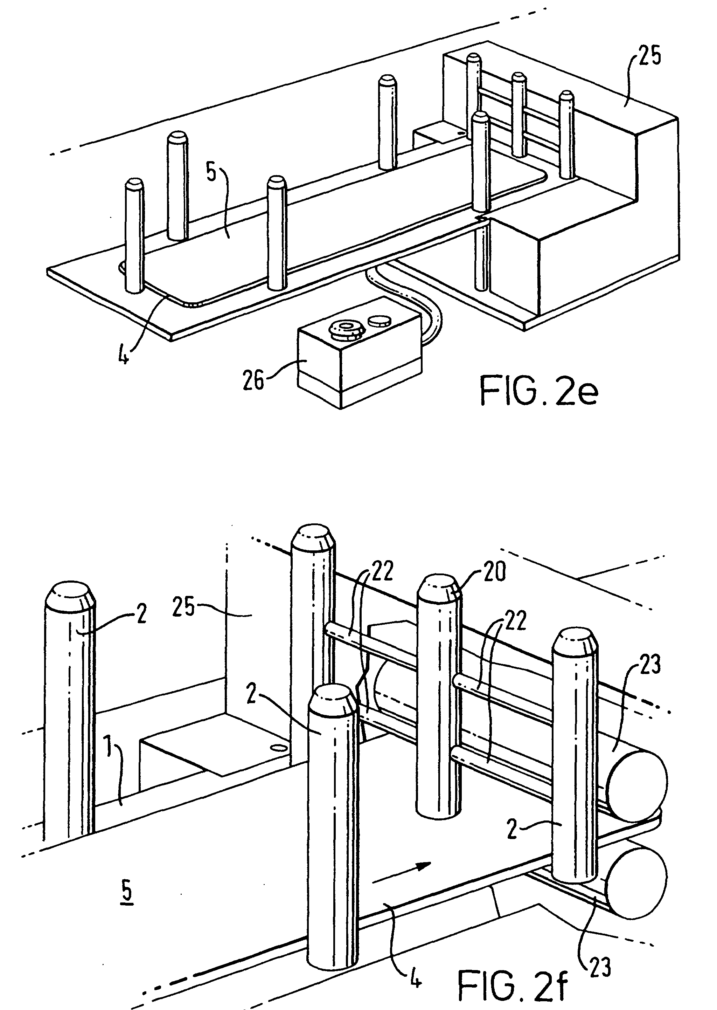

The drawings of Figs 2a to 2g show a more automated apparatus and method with like parts being referenced with the same numerals as in Fig 1. Here there is no platform 3 on the base of the apparatus 1 as is shown in Figs 1. One end, however, has a post 20 which is spaced from the base indicated by "GAP" and supported by cross-members 22; this end being adjacent pressure applying rollers 23 which are located in housing 25 and driven by an electric motor which is controlled by a control unit 26. (see Figs 2b and 2f).

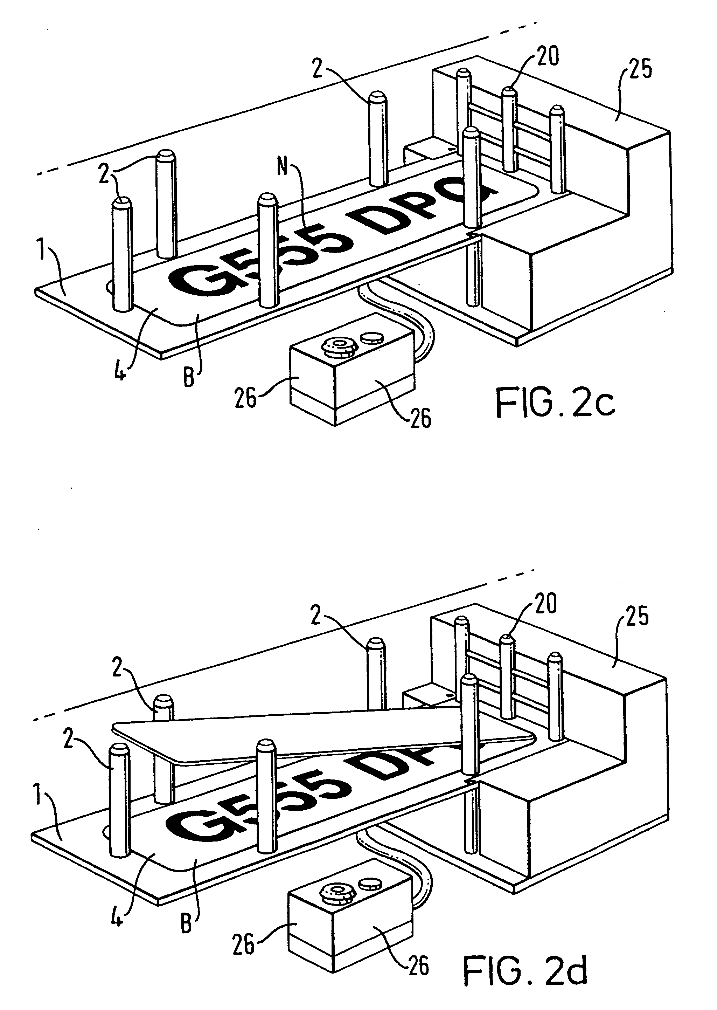

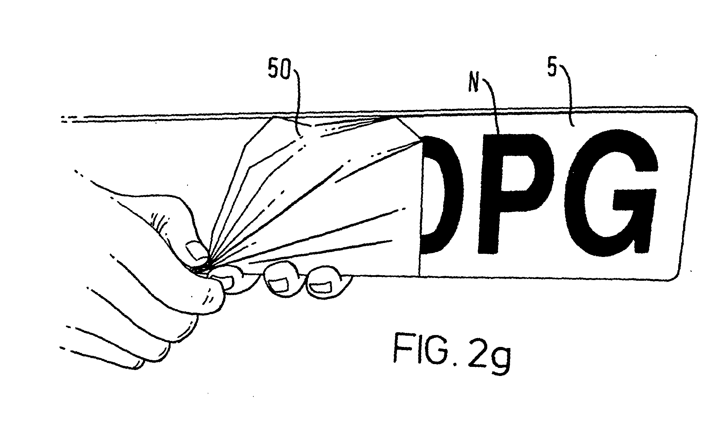

The method is similar to the embodiment of Figs 1 and as shown in Fig 2c a backing plate B to which the reflective sheet has been applied, or just the reflective sheet 4, is positioned in the jig, this sheet having the indicia **N** adhered in position as shown in Fig 2c. In Fig. 2d the second or top plate 5, having had the protective layer removed to reveal the adhesive coating, is shown being dropped into position commencing from one end in this case. Fig. 2e shows the final position of rest after which the assembled plate is caused to slide beneath the end post 20 and to then pass between the pressure rollers 23 as shown in Fig. 2f. After this operation the protective coating 50 on the front facing surface of front plate 5 is then removed to expose the indicia **N** as shown in Fig 2g and the number plate is ready for use.

It is to be understood that the sequence and method of application of the indicia N and the assembly of the plates and sheet may vary. For example the indicia may be applied in a reverse sense to the front plate which is then bonded to the reflective sheet and the back plate. Other sequences of assembly may be adopted without departing from the essence of this invention which is the free-fall of the one component onto another guided by the jig to provide a satisfactory coupling between the adhesive surface thus removing operator error in alignment and allowing all components to be pre-cut to exact size.

The apparatus of Fig 2 may be adapted to hand operation by providing manual operation of the rollers 23.

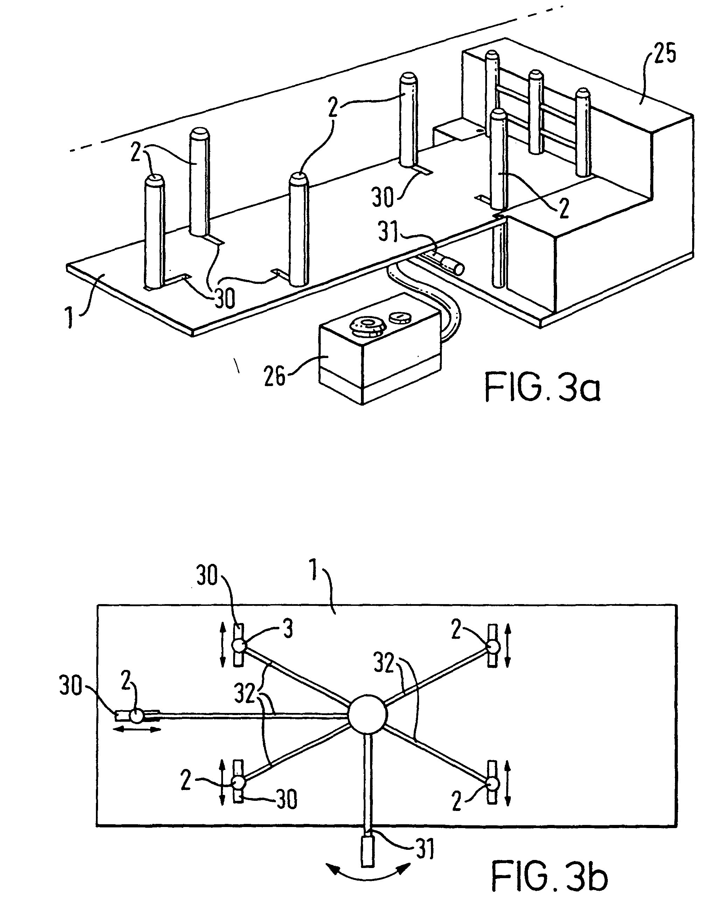

A modified arrangement of the base 1 and posts 2 is shown in Fig. 3 which accommodates various different sizes of plate. As shown the base 1 carries the posts 2 defining the two sides and one edge in slots 30 so that the jig thus formed may be adjusted to various sizes of plate. Fig. 3b shows one construction schematically from below wherein the posts are moved in their slots be a lever arrangement 31 with linkages 32. Either all the posts may be moved together in predefined ratios to accommodate various plate sizes, or each post may be individually adjusted.

## Claims

1. A method of assembling a vehicle number plate (B, 4, 5, n) from:
i) a reflective sheet (4),
ii) indicia (n) and
iii) a cover plate (5);
the reflective sheet (4) having an identical size to that of the cover plate (5), the cover plate (5) being provided with an adhesive (6') on its surface, the method comprising overlaying the reflective sheet (4) and indicia (n) with the cover plate (5) and subjecting the reflective sheet(4) , indicia (n) and cover plate (5) to pressure to bond the reflective sheet and cover plate together, **characterised by** the overlaying step comprising positioning the cover plate (5) above the reflective sheet (4) and indicia (n), and by allowing the cover plate (5) to free fall under gravity onto the reflective sheet (4) and indicia (n).

2. A method in accordance with Claim 1, **characterised in that** the reflective sheet and the cover plate have correspondingly radiused comers with the reflective sheet being pre-cut or defined by perforated areas (6) on a roll containing a plurality of such sheets.

3. A method in accordance with Claim 1 or 2, **characterised in that** the assembly comprising the cover plate (5) and reflective sheet (4) are permanently bonded together by passing between pressure rollers (7, 7') after removal from the jig.

4. An apparatus for assembling a vehicle number plate from;
i) a reflective sheet (4),
ii) indicia and
iii) a cover plate (5) with an adhesive (6') on its surface;
the cover plate (5) being placed over the reflective sheet (4) and indicia (n), the apparatus comprising a jig (1) having a base (3) and a number of abutments (2), **characterised in that** the abutments (2) comprise upstanding parallel posts to centralise the cover plate (5) above the reflective sheet (4) before the cover plate (5) is dropped to contact the sheet by gravity.

5. An apparatus in accordance with claim 4, **characterised in that** an abutment (20) defining an end of the jig (1) is spaced from the base (3) and positioned adjacent rollers (7, 7') and arranged so that the reflective sheet (4) and plate (5) can move laterally to pass beneath the abutment (20) and between the rollers (7, 7').

6. An apparatus in accordance with Claims 4 or 5, **characterised in that** the jig comprises a base member (1) with upstanding posts (2) forming abutments defining the four sides of the cover plate (5).

7. An apparatus in accordance with Claims 4, 5 or 6, **characterised in that** the dimensions of the jig ensure precise location of the cover plate (5) and the reflective sheet (4) but with a small clearance to allow the free-fall of the coverplate (5) without excess side-play.

8. An apparatus in accordance with any preceding Claim 4 to 7, **characterised in that** two posts (2) define each longer side of the cover plate (5) with one post at each of the ends.

9. An apparatus in accordance with any preceding Claim 4 to 8, **characterised in that** the area between the posts (2) forming the jig has a raised platform (3) sufficient to allow the opposed edges of the assembled reflective sheet (4) and cover plate (5) to be gripped by the fingers for removal.

10. An apparatus in accordance with any preceding Claim 4 to 9, **characterised in that** some or all of the posts (2) have a slight eccentricity in cross-section or mounting so that rotation thereof produces a small adjustment in the dimensions of the jig.

11. An apparatus in accordance with any preceding Claim 4 to 10, **characterised in that** the posts (2) are located in slots (30) on the base (1) whereby the jig dimension is variable.

12. An apparatus in accordance with any preceding Claim 4 to 11, wherein a post (20) defining an end of the jig is spaced from the base (3) by a gap such that the assembly can move laterally to slide out of the jig beneath said gap.

13. An apparatus in accordance with any preceding Claim, **characterised in that** the base (3) is associated with an apparatus (25) including two rollers (7, 7') positioned adjacent the gap beneath the end post, whereby the assembled cover plate (5) and reflective sheet (4) is caused to move from the jig beneath the end post and between the rollers which apply pressure to the assembly.

## Patentansprüche

1. Verfahren zur Herstellung eines Fahrzeugnummernschildes (B, 4, 5 n) aus
i) einer reflektierenden Folie (4),
ii) Kennzeichen (n), und
iii) einer Abdeckplatte (5),
wobei die Abdeckplatte (5) auf ihrer einen Fläche mit einem Klebstoff (6') versehen ist, die Reflexfolie (4) identische Abmessungen wie die Abdeckplatte (5) aufweist und die Abdeckplatte (5) nach dem Verfahren auf die Reflexfolie (4) und die Kennzeichen (n) aufgelegt wird und die Reflexfolie (4), die Kennzeichen (n) und die Abdeckplatte (5) unter Druck zwecks Verbindung von Reflexfolie und Abdeckplatte gesetzt werden, **dadurch gekennzeichnet, dass** im Zuge des Übereinanderlegens die Abdeckplatte (5) über die Reflexfolie (4) und die Kennzeichen (n) positioniert wird und die Abdeckplatte (5) dann durch Schwerkraft in freiem Fall auf die Reflexfolie (4) und die Kennzeichen (n) fällt.

2. Verfahren nach Anspruch 1, **dadurch gekennzeichnet, dass** die Reflexfolie (4) und die Abdeckplatte (5) an ihren Ecken einander entsprechend abgerundet sind, wobei die Reflexfolie auf einer eine Vielzahl solcher Folien aufweisenden Walze vorgestanzt oder durch Perforierungen (6) definiert ist.

3. Verfahren nach den Ansprüchen 1 oder 2, **dadurch gekennzeichnet, dass** im Zuge der Herstellung die Abdeckplatte (5) und die Reflexfolie (4) beim Durchlauf durch Druckwalzen (7, 7') fest miteinander verbunden werden, ehe sie aus der Aufspannvorrichtung abgenommen werden.

4. Vorrichtung zur Herstellung eines Fahrzeugnummernschildes aus
i) einer reflektierenden Folie (4),
ii) Kennzeichen, und
iii) einer Abdeckplatte (5) mit einem Klebstoff (6') auf einer Fläche;
wobei die Abdeckplatte (5) über die Reflexfolie (4) und die Kennzeichen (n) gelegt wird, wobei die Vorrichtung eine Aufspannvorrichtung (1) mit einer Auflagefläche (3) und mehreren Anschlägen (12) aufweist, **dadurch gekennzeichnet, dass** die Anschläge (2) aus senkrecht stehenden parallelen Zapfen zur Zentrierung der Abdeckplatte (5) über der Reflexfolie (4) bestehen, ehe die Abdeckplatte (5) durch Schwerkraft auf die Folie herabfällt.

5. Vorrichtung nach Anspruch 4, **dadurch gekennzeichnet, dass** ein das Ende der Aufspannvorrichtung (1) definierender Anschlag (20) im Abstand zur Auflagefläche (3) und im Bereich der Walzen (7, 7') vorgesehen ist und so angeordnet ist, dass Reflexfolie (4) und Abdeckplatte (5) seitlich unter dem Anschlag (20) hindurch und zwischen den Walzen (7, 7') bewegbar sind.

6. Vorrichtung nach den Ansprüchen 4 oder 5, **dadurch gekennzeichnet, dass** die Aufspannvorrichtung eine Grundplatte (1) mit senkrechten Zapfen (2) aufweist, die Anschläge für die vier Seiten der Abdeckplatte (5) bilden.

7. Vorrichtung nach den Ansprüchen 4, 5 oder 6, **dadurch gekennzeichnet, dass** die Abmessungen der Aufspannvorrichtung eine exakte Positionierung der Abdeckplatte (5) und der Reflexfolie (4) gewährleisten, allerdings mit leichtem Spiel, das den freien Fall der Abdeckplatte (5) ohne abträgliches Verrutschen erlaubt.

8. Vorrichtung nach einem der vorhergehenden Ansprüche 4 bis 7, **dadurch gekennzeichnet, dass** zwei Zapfen (2) jeweils eine lange Seite der Abdeckplatte (5) begrenzen und ein Zapfen jeweils eines ihrer Enden.

9. Vorrichtung nach einem der Ansprüche 4 bis 8, **dadurch gekennzeichnet, dass** der zwischen den die Aufspannvorrichtung bildenden Zapfen liegende Bereich eine so weit erhöhte Auflagefläche (3) aufweist, dass die verbundene Einheit aus Reflexfolie (4) und Abdeckplatte (5) an einander gegenüberliegenden Kanten mit den Fingern erfasst und abgenommen werden kann.

10. Vorrichtung nach einem der vorhergehenden Ansprüche 4 bis 9, **dadurch gekennzeichnet, dass** einige oder alle Zapfen (2) im Querschnitt oder montiert geringfügig exzentrisch sind, so dass bei ihrer Verdrehung die Abmessungen der Aufspannvorrichtung in kleinem Maße einstellbar sind.

11. Vorrichtung nach einem der vorhergehenden Ansprüche 4 bis 10, **dadurch gekennzeichnet, dass** die Zapfen (2) in Schlitzen (30) der Grundplatte (1) angeordnet sind, so dass die Abmessungen der Aufspannvorrichtung einstellbar sind.

12. Vorrichtung nach einem der vorhergehenden Ansprüche 4 bis 11, **dadurch gekennzeichnet, dass** ein das Ende der Vorrichtung begrenzender Zapfen (20) von der Auflagefläche (3) durch einen Spalt getrennt ist, so dass das fertige Stück seitlich unterhalb des Spaltes aus der Aufspannvorrichtung heraus bewegbar ist.

13. Vorrichtung nach einem der vorhergehenden Ansprüche, **dadurch gekennzeichnet, dass** die Grundplatte (3) Teil eines zwei Walzen (7, 7') umfassenden Geräts ist, dessen Walzen sich im Bereich des Spaltes unterhalb des Endzapfens befinden, so dass die mit der Reflexfolie (4) zusammengefügte Abdeckplatte aus der Aufspannvorrichtung unterhalb des Endzapfens und zwischen den die Einheit beaufschlagenden Druckwalzen bewegbar ist.

## Revendications

1. Procédé de fabrication de plaques numérologiques (B, 4, 5, n) de véhicule à partir de :
i) une feuille réfléchissante (4),
ii) des signes (n) et
iii) une plaque de couverture (5) ;
la feuille réfléchissante (4) ayant une taille identique à celle de la plaque de couverture (5), la plaque de couverture (5) étant pourvue d'un adhésif (6') sur sa surface, le procédé comprenant l'étape consistant à superposer la feuille réfléchissante (4), les signes (n) et la plaque de couverture (5) pour comprimer et lier la feuille réfléchissante et la plaque de couverture ensemble, **caractérisé en ce que** l'étape consistant à superposer comprend l'étape consistant à positionner la plaque de couverture (5) au-dessus de la feuille réfléchissante (4) et les signes (n) et en permettant à la plaque de couverture (5) de tomber librement sous l'effet de gravité sur la feuille réfléchissante (4) et les signes (n).

2. Procédé selon la revendication 1, **caractérisé en ce que** la feuille réfléchissante et la plaque de couverture possèdent des coins arrondis de manière correspondante, la feuille réfléchissante étant prédécoupée ou définie par des zones perforées (6) sur un rouleau comprenant une pluralité de telles feuilles.

3. Procédé selon la revendication 1 ou 2, **caractérisé en ce que** l'assemblage comprend la plaque de couverture (5) et la feuille réfléchissante (4) qui sont liées de manière permanente ensemble en passant entre des rouleaux de pression (7, 7') après le retrait du dispositif de serrage.

4. Dispositif de fabrication d'une plaque numérologique de véhicule à partir de :
i) une feuille réfléchissante (4),
ii) des signes et
iii) une plaque de couverture (5) ayant un adhésif (6') sur sa surface ;
la plaque de couverture (5) étant placée sur la feuille réfléchissante (4) et les signes (n), le dispositif comprenant un dispositif de serrage (1) ayant une base (3) et un certain nombre de butées (2), **caractérisé en ce que** les butées (2) comprennent des tiges parallèles verticales pour centraliser la plaque de couverture (5) au-dessus de la feuille réfléchissante (4) avant que la plaque de couverture (5) soit lâchée pour entrer en contact avec la feuille sous l'effet de gravité.

5. Dispositif selon la revendication 4, **caractérisé en ce qu'**une butée (20) définissant une extrémité du dispositif de serrage (1) est espacée de la base (3) et positionnée de manière adjacente aux rouleaux (7, 7') et agencée de façon à ce que la feuille réfléchissante (4) et la plaque (5) puissent se déplacer de manière latérale pour passer au-dessous de la butée (20) et entre les rouleaux (7, 7').

6. Dispositif selon la revendication 4 ou 5, **caractérisé en ce que** le dispositif de serrage comprend un élément de base (1) avec des tiges verticales (2) formant des butées définissant les quatre côtés de la plaque de couverture (5).

7. Dispositif selon l'une quelconque des revendications 4 5, ou 6, **caractérisé en ce que** les dimensions du dispositif de serrage assurent le positionnement précis de la plaque de couverture (5) et de la feuille réfléchissante (4) mais avec un léger espace pour permettre la chute libre de la plaque de couverture (5) sans jeu latéral excessif.

8. Dispositif selon l'une quelconque des revendications 4 à 7, **caractérisé en ce que** deux tiges (2) définissent chaque plus long côté de la plaque de couverture (5) avec une tige sur chacune des extrémités.

9. Dispositif selon l'une quelconque des revendications 4 à 8, **caractérisé en ce que** la zone entre les tiges (2) formant le dispositif de serrage possède une plateforme surélevée (3) suffisante pour permettre aux bords opposés de la feuille réfléchissante (4) et de la plaque de couverture (5) assemblées d'être saisis par les doigts pour un retrait.

10. Dispositif selon l'une quelconque des revendications 4 à 9, **caractérisé en ce que** certains ou toutes les tiges (2) ont une légère excentricité transversale ou de montage de sorte que la rotation de celles-ci produise un petit ajustement dans les dimensions du dispositif de serrage.

11. Dispositif selon l'une quelconque des revendications 4 à 10, **caractérisé en ce que** les tiges (2) sont agencées dans des fentes (30) sur la base (1) moyennant quoi la dimension du dispositif de serrage est variable.

12. Dispositif selon l'une quelconque des revendications 4 à 11, dans lequel une tige (20) définissant une extrémité du dispositif de serrage est espacée de la base (3) par un vide tel que l'assemblage puisse se déplacer de manière latérale pour coulisser à l'extérieur du dispositif de serrage au-dessous dudit vide.

13. Dispositif selon l'une quelconque des revendications précédentes, **caractérisé en ce que** la base (3) est associée à un appareil (25) comprenant deux rouleaux (7, 7') positionnés de manière adjacente au vide au-dessous du pieu d'extrémité, moyennant quoi la plaque de couverture (5) et la feuille réfléchissante (4) assemblées sont entraînées à se déplacer à partir du dispositif de serrage au-dessous du pieu d'extrémité et entre les rouleaux qui appliquent une pression sur l'assemblage.
